(19) Europäisches Patentamt
European Patent Office
Office européen des brevets

(11) **EP 2 087 249 B1**

(12) **EUROPÄISCHE PATENTSCHRIFT**

(45) Veröffentlichungstag und Bekanntmachung des Hinweises auf die Patenterteilung:
**20.07.2011 Patentblatt 2011/29**

(21) Anmeldenummer: **07846523.4**

(22) Anmeldetag: **31.10.2007**

(51) Int Cl.:
**F16C 19/49** (2006.01) **F03D 11/00** (2006.01)

(86) Internationale Anmeldenummer:
**PCT/EP2007/009484**

(87) Internationale Veröffentlichungsnummer:
**WO 2008/052778 (08.05.2008 Gazette 2008/19)**

(54) **WÄLZLAGERANORDNUNG**

ROLLING BEARING ARRANGEMENT

ENSEMBLE DE PALIER A ROULEMENT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.10.2006 DE 202006016813 U**
**17.08.2007 DE 202007011577 U**

(43) Veröffentlichungstag der Anmeldung:
**12.08.2009 Patentblatt 2009/33**

(73) Patentinhaber: **IMO Holding GmbH**
**91350 Gremsdorf (DE)**

(72) Erfinder: **FRANK, Hubertus**
**91315 Höchstadt (DE)**

(74) Vertreter: **Küchler, Stefan**
**Patentanwalt**
**Färberstrasse 20**
**90402 Nürnberg (DE)**

(56) Entgegenhaltungen:
**EP-A- 0 158 015 DE-C1- 3 905 986**

**Beschreibung**

Die Erfindung richtet sich auf eine Wälzlageranordnung, vorzugsweise auf ein Großwälzlager mit einem Durchmesser von 0,5 m oder mehr, bspw. für eine Drehverbindung, insbesondere im Rahmen einer Windkraftblattlagerung, mit zwei konzentrisch zueinander sowie zumindest bereichsweise ineinander angeordneten, ringförmigen Elementen zum Anschluß an je eines von zwei gegeneinander verdrehbaren Anlagenteilen, sowie mit einem Spalt zwischen diesen Anschlußelementen, so dass sie um eine gedachte, zur Ringebene etwa lotrechte Achse im Zentrum der ringförmigen Anschlußelemente gegeneinander verdrehbar sind, wobei im Bereich des Spaltes zwischen den Anschlußelementen wenigstens zwei Reihen von Wälzkörpern vorgesehen sind.

Eine solche Wälzlageranordnung ist z.B. aus DE 3905986 bekannt.

Großwälzlager, d.h., ab einem Durchmesser von etwa 0,5 m, sind bei vielen Anwendungsfällen häufig besonders starken Kräften oder Momenten lotrecht zu ihrer Grundebene ausgesetzt, die sie nicht ohne Verformung ertragen können. Hierbei ist bspw. auch an Baufahrzeuge zu denken, bspw. Bagger, wobei die drehbare Fahrzeugkanzel über ein Großwälzlager mit dem Fahrgestell verbunden ist und gleichzeitig die Baggerschaufel trägt, so dass die darauf einwirkenden Kräfte beim Ziehen oder Anheben von Lasten von dem Großwälzlager aufgenommen werden müssen. Viel stärker beansprucht werden jedoch die Großwälzlager, welche bei Windkraftanlagen zum Einsatz kommen. Bspw. sind die Rotorblätter üblicherweise über je ein Großwälzlager mit der Nabe verbunden, damit sie der Windstärke entsprechend angestellt werden können. Bei zeitlich etwa konstanter Windstärke wird diese Einstellung dann nicht verändert - das Blattlager wird nicht verdreht, obwohl es teilweise sehr großen Windlasten ausgesetzt ist. Bei der Aufnahme solcher Lasten verformen sich die Ringe eines Lagers, allerdings nicht beide gleichsinnig, sondern auf unterschiedliche Weise. Bspw. zieht bereits eine reine Axialbelastung eines Lagers mit einem üblichen Tragwinkel zwischen 35° bis 70° eine Radialkomponente der Belastung an den Wälzkörpern nach sich. Da sich die Wälzkörper dabei verformen, ergibt sich zwischen den beiden Ringen eine Aufweitung des Außenrings und gleichzeitig eine Einschnürung des Innenrings. Bei komplexeren Belastungsfällen, bei denen neben einer Axialbelastung auch Radial- und/oder Kippmomentbelastungen auftreten, können die davon ausgelösten Verformungen derart aussehen, dass zum Beispiel der Außenring eine elliptische Form annimmt und der Innenring sich ebenfalls elliptisch verformt, wobei die beiden Ellipsen allerdings um 90° gegeneinander versetzt sind. Solche starken Verformungen bringen eine Reihe von gravierenden Nachteilen mit sich: Zum einen verursachen sie einen beträchtlichen Anstieg des Reibmoments, da die Wälzkörper bei jeder Drehbewegung des Wälzlagers verformt werden müssen und außerdem das Schmiermittel an den überlasteten Wälzkörpern verdrängt wird, so dass dort der Schmierfilm abreißt, gerade auch deshalb, weil solche Großwälzlager häufig im Stillstand belastet werden. Andererseits bringt die starke Verformung der Ringe bei abgedichteten Lagern im Fall wechselnder Belastungen starke Pumpbewegungen mit sich, die ein Schmiermittel starken lokalen Drücken aussetzen, was zwangsläufig eine erhöhte Leckage zur Folge hat. In ihrer Summe führen diese nachteiligen Effekte zu eine Reduzierung der Betriebsdauer eines solchen Großwälzlagers, was nicht nur infolge der damit verbundenen Ersatzteilkosten, sondern auch aufgrund des Stillstandes einer beschädigten Anlage nicht unbeträchtliche Kosten nach sich zieht.

Aus diesen Nachteilen des beschriebenen Standes der Technik resultiert das die Erfindung initiierende Problem, ein Wälzlager, insbesondere ein Großwälzlager, derart weiterzubilden, dass selbst bei einem ungünstigen Belastungsfall, d.h., bei einer geringen Verdrehungsrate oder gar häufigem Stillstand, ggf. unter oftmals etwa gleichen Verdrehwinkeln, einerseits, sowie bei starken Axial-, Radial-und/oder Kippmomentbelastungen andererseits, die Betriebsdauer des Wälzlagers maximal ist.

Die Lösung dieses Problems gelingt dadurch, dass die ringförmigen Anschlußelemente einander in radialer Richtung ganz oder teilweise überlappen, und eine oder mehrere Laufbahnen für kugelfömige wälzkörper in radial überlappenden Bereichen der ringförmigen Anschlußelemente angeordnet sind, derart, dass der Tragwinkel, den die Verbindungslinie zwischen den Zentren der Berührungspunkte eines Wälzkörpers mit dessen beiden Laufbahnen gegenüber der Ringebene einschließt, gleich oder größer ist als 75°, bspw. gleich oder größer als 80°, vorzugsweise gleich oder größer als 85°, insbesondere gleich oder größer als 88° oder näherungsweise exakt 90° - eine solche Wälzkörperreihe soll im folgenden als "Wälzkörperreihe mit großem Tragwinkel" bezeichnet werden; und wobei die Wälzkörper wenigstens einer (anderen) Reihe einen Tragwinkel von 15° oder weniger haben, bspw. 10° oder weniger, vorzugsweise 5° oder weniger, insbesondere 2° oder weniger - eine solche Wälzkörperreihe soll im folgenden als "Wälzkörperreihe mit kleinem Tragwinkel" bezeichnet werden.

Die Erfindung besteht demnach aus mehreren Schritten: Zunächst wird zwischen den beiden Anschlußelementen ein radial überlappender Bereich geschaffen, was für ein Großwälzlager mit radial ineinander angeordneten Anschlußringen (Innenring und Außenring) bereits völlig unüblich ist; sodann wird dieser Überlappungsbereich für eine Erhöhung des Tragwinkels bis zu einem Wert von etwa 90° genutzt. Dabei ist die gesamte Laufbahngeometrie zu berücksichtigen. Üblicherweise ist der quer zur Rollrichtung gemessene Wölbungsradius einer Wälzkörperlaufbahn geringfügig größer als der Radius einer Kugel, so dass sich ein definierter, nahezu punktförmiger Berührungsbereich ergibt. Durch die Relativlage der Mittelpunkte beider Laufbahnquerschnitte und der Kugeln kann der Tragwinkel vorgegeben werden: Liegen diese Mittelpunkte etwa in axialer Richtung, also parallel zu der Drehachse des Wälzlagers, gegeneinander versetzt, allerdings in entgegengesetzten Richtungen, d.h., innerhalb einer gemeinsamen Querschnittsebene liegt der Mittelpunkt der unteren Laufbahn oberhalb des Mittelpunktes der oberen Laufbahn, so spannen diese Mittelpunkte eine Verbindungslinie auf, an deren mittleren Bereich sich etwa der Mittelpunkt einer Kugel befindet, wenn diese gerade eben durch die betreffende Querschnittsebene hindurchtritt. Ist diese Verbindungslinie, deren Winkel gegenüber der Grundebene des Wälzlagers dem Tragwinkel entspricht, exakt oder zumindest näherungsweise parallel zu der Lagerdrehachse, so werden Axialkräfte von den Lagerringen ohne Erzeugung einer die Ringe verformenden, radialen Kraftkomponente übertragen. Dies gilt auch für Kippmomente, welche im Grunde genommen einer unsymmetrischen Axialbelastung entsprechen. Da Wälzlagerringe üblicherweise an Maschinen- oder Anlagenkomponenten flach anliegend angeschlossen sind und dabei eine zusätzliche Aussteifung in ihrer Axialrichtung erfahren, sind sie gegenüber einer reinen Axialbelastung ansonsten relativ unempfindlich. Die Verformung der gegeneinander verdrehbaren Lagerringe kann daher mit dieser Maßnahme erheblich reduziert werden. Die Wälzkörperreihe mit kleinem Tragwinkel dient vornehmlich der Übertragung von Radialkräften bzw. der gegenseitigen Zentrierung der beiden Anschlußelemente. Dabei stellt allerdings ein Tragwinkel von 15° einen oberen Grenzwert dar; bevorzugt werden eher Tragwinkel um 0°, also von weniger als 5° oder gar von weniger als 2°. Dadurch sind die Einflüsse äußerer Radialkräfte von denen äußerer Axialkräfte weitgehend entkoppelt, d.h., äußere Radialkräfte erzeugen in dem Lager keine inneren Axialkräfte und äußere Axialkräfte erzeugen keine inneren Radialkräfte.

Es hat sich als günstig erwiesen, dass ein ringförmiges Anschlußelement wenigstens einen dem anderen zugewandten, rundumlaufenden Bereich aufweist, wobei wenigstens eine Flanke desselben von dem anderen Anschlußelement zumindest bereichsweise umgriffen wird. Eine solche Flanke bildet dabei zusammen mit dem dieselbe seitlich umgreifenden Bereich des anderen Anschlußelementes einen radial überlappenden Bereich, mit der Möglichkeit, in diesem Bereich wenigstens eine Reihe von Wälzkörpern anzuordnen, deren Tragwinkel etwa gleich 90° eingestellt werden kann.

Da mit einem nur einfach überlappenden Bereich zwischen den gegeneinander verdrehbaren Anschlußelementen nur Axialkräfte in Druckrichtung übertragen werden können, sieht die Erfindung im Rahmen einer Weiterbildung der Erfindung vor, dass ein ringförmiges Anschlußelement wenigstens einen dem anderen zugewandten, rundumlaufenden Bereich aufweist, dessen beide Flanken von dem anderen Anschlußelement zumindest bereichsweise umgriffen werden. Mit einer solchen, zweifachen Überlappung, wobei ein Bereich eines Anschlußelementes an beiden Flankenseiten überlappt wird, lassen sich wenigstens zwei Reihen von Wälzkörpern anordnen, um sowohl Axialkräfte in Druckrichtung als auch in Zugrichtung übertragen zu können.

Wenigstens ein von dem jeweils anderen Anschlußelement flankenseitig umgriffener, rundumlaufender Bereich eines Anschlußelements, kann als rundumlaufender, radial in Richtung auf das andere Anschlußelement vorspringender Fortsatz ausgebildet sein, so dass nicht der betreffende Ring insgesamt umgriffen werden muß, sondern nur ein an dessen dem Lagerspalt zugewandter Mantelseite entlang laufender Bund von verringerter axialer Höhe, so dass trotz der (teilweisen) radialen Überlappung im Bereich eines solchen Bundes die gesamte Bauhöhe des Lagers in axialer Richtung, d.h., lotrecht zu seiner Grundebene, nicht größer gewählt werden muß als bei einem herkömmlichen Lager mit vergleichbarer Baugröße.

Die Erfindung sieht weiterhin vor, dass die umgriffene(n) Flanke(n) wenigstens eines Fortsatzes als Laufbahn (en) für Wälzkörper ausgebildet ist (sind). Damit nutzt die Erfindung die durch die radiale Überlappung geschaffene Möglichkeit, einander radial überlappende Laufbahnen vorzusehen, so dass die Wälzkörper mit einem Tragwinkel von nahezu 90° betrieben werden können.

Die Erfindung läßt sich dahingehend weiterbilden, dass in der Stirnseite wenigstens eines Fortsatzes zumindest eine Laufbahn für wenigstens eine weitere Reihe von Wälzkörpern vorgesehen ist. Diese zusätzliche Wälzkörper dieser zusätzlichen Reihe rollen demnach zwischen zwei Laufbahnen der Anschlußelemente ab, welche in zwei einander gegenüberliegenden Mantelflächen im Bereich des Ringspaltes eingearbeitet sind und demnach in radialer Richtung bezogen auf die Wälzlagerdrehachse gegeneinander versetzt sind. Diese zusätzliche Wälzlagerreihe ist daher in der Lage, Radialkräfte zwischen den Ringen zu übertragen, so dass ein damit ausgestattetes Lager für alle denkbaren Belastungsfälle geeignet ist.

Es liegt im Rahmen der Erfindung, dass ein ringförmiges Anschlußelement einen etwa C-förmigen Querschnitt aufweist mit wenigstens zwei dem anderen zugewandten, rundumlaufenden Bereichen, in deren Zwischenraum sich ein Bereich des anderen Anschlußelementes erstreckt. Aufgrund dieser Querschnittsgeometrie ist ein solches Anschlußelement in die Lage versetzt, einen rundumlaufenden Fortsatz des anderen Anschlußelements an beiden Flanken zu umgreifen und demzufolge eine doppelte Überlappung auszubilden. Da hierbei die beiden Überlappungsbereiche eine spiegelbildliche Struktur aufweisen hinsichtlich einer etwa mittigen Grundebene des betreffenden Wälzlagers, läßt sich damit eine Lageranordnung realisieren, mit der Druckkräfte in beiden axialen Richtungen übertragen werden.

Hierzu sieht die Erfindung vor, dass an den einander zugewandten Innenflächen des Anschlußelements mit C-förmigem Querschnitt, insbesondere an den einander zugewandten Flanken seiner erhabenen Bereiche, je eine Laufbahn für eine Reihe von Wälzkörpern angeordnet ist. Diese Laufbahnen bilden jeweils das Pendant zu je einer Laufbahn an dem umgriffenen Fortsatz des anderen Anschlußelements. Als Pendant haben sie die selbe Querschnittsgeometrie wie die damit korrespondierenden Laufbahnen an dem umgriffenen Fortsatz des ersten Anschlußelements.

Die Erfindung erlaubt außerdem eine Weiterbildung dahingehend, dass im Bereich wenigstens einer Vertiefung zwischen zwei erhabenen Bereichen des Anschlußelements mit C-förmigem Querschnitt wenigstens eine Laufbahn für wenigstens eine weitere Reihe von Wälzkörpern vorgesehen ist. Diese Laufbahn dient als Pendant zu der zusätzlichen Laufbahn in der Stirnseite des umgriffenen Fortsatzes des anderen Anschlußelements; sie befindet sich deshalb vorzugsweise am Grund einer zwischen zwei erhabenen Bereichen rundum laufenden, nutförmigen Vertiefung. Als Pendant hat sie die selbe Querschnittsgeometrie wie die damit korrespondierende, zusätzliche Laufbahn an dem anderen Anschlußelement.

Der Zusammenbau der beiden ineinander eingreifenden Anschlußelemente wird dadurch erleichtert, dass ein ringförmiges Anschlußelement, vorzugsweise das mit C-förmigem Querschnitt, aus wenigstens zwei voneinander getrennten, aufeinander liegenden Einzelringen besteht. Dadurch können die beiden Hälften bzw. Einzelringe des Anschlußelements mit C-förmigem Querschnitt vorübergehend voneinander getrennt und sodann das andere Anschlußelement von beiden Seiten umgebend wieder zusammengesetzt werden, ggf. bei gleichzeitigem Einsetzen der - bspw. von je einem Käfig zusammengehaltenen - Wälzkörperreihen.

Es liegt im Rahmen der Erfindung, dass das Anschlußelement mit C-förmigem Querschnitt das andere radial innen und/oder außen umgreift. Wie weiter unten erläutert wird, kommt dabei einer Lagerstruktur mit einem beidseitig, d.h. sowohl radial innen als auch außen (bezüglich der Drehachse des Lagers), umgriffenen Anschlußelement besondere Bedeutung zu.

Die radiale Überlappungsweite w sollte größer sein als die halbe Erstreckung der Wälzkörper in radialer Richtung bezogen auf die Ringdrehachse des Wälzlagers, damit die Wälzkörper keiner Scherbelastung ausgesetzt sind. Bei kugelförmigen Wälzkörpern ist diese Konstruktionsvorschrift gleichbedeutend mit einer radialen Überlappungsweite von mehr als dem Kugelradius. Ein bevorzugter Wert für die radiale Überlappungsweite liegt etwa bei dem 1,5-fachen des Kugelradius oder darüber.

Insgesamt sollten wenigstens zwei Reihen von Wälzkörpern vorgesehen sein, welche in axialer Richtung gegeneinander versetzt sind. Sofern die Laufbahnen an den beiden Anschlußelementen für diese beiden Wälzkörperreihen spiegelbildlich zu einer etwa mittigen Grundebene des Wälzlagers angeordnet sind, werden Axialdruckkräfte in einer Richtung von den Wälzkörpern der einen Reihe übertragen, für Axialdruckkräfte in entgegengesetzter Richtung sind dagegen die Wälzkörper der anderen Reihe zuständig.

Die Erfindung zeichnet sich weiterhin aus durch wenigstens zwei Reihen von Wälzkörpern, die jeweils einen Tragwinkel von 75° oder mehr haben, bspw. 80° oder mehr, vorzugsweise 85° oder mehr, insbesondere 88° oder mehr. Aufgrund derart großer Tragwinkel sind diese Wälzlagerreihen in der Lage, Axialkräfte zu übertragen, ohne dabei allzu große Radialkräfte zu erzeugen. Dabei ist allerdings ein Tragwinkel von 75° als unterster Grenzwert anzusehen; bevorzugt werden eher Tragwinkel um 90°, also zwischen 85° oder gar 88° einerseits bis zu 90° andererseits.

Die Wälzkörper mit einem großen Tragwinkel sind als Kugeln ausgebildet , welche mit ihren Laufbahnen nahezu punktförmige Berührungsbereiche ausbilden, so dass die radiale Überlappungsweite kleiner als die Erstreckung der Wälzkörper in radialer Richtung bezüglich der Wälzlagerdrehachse gewählt werden kann. Da bei rollen- bzw. (leicht) kegelförmigen Wälzkörpern die Berührungsbereiche linienförmig ausgebildet sind und sich im Idealfall über die gesamte Länge einer Rolle erstrecken, lassen solche Wälzkörper eine entsprechende Verkürzung der Überlappungsweite nicht zu.

Die Wälzkörper mit kleinem Tragwinkel können rollenförmig, kegel- oder tonnenförmig oder kugelförmig ausgebildet sein, da hierbei linienförmige, Berührungsflächen parallel zu der Drehachse des Wälzlagers verlaufen und daher keinen Einfluß auf die radiale Überlappungsweite haben.

Die Erfindung sieht weiterhin vor, dass bei kugelförmigen Wälzkörpern die einander zugewandten Laufbahnen zur Aufnahme einer gemeinsamen Reihe von Kugeln jeweils einen kreissegmentförmigen Querschnitt aufweisen, dessen Querwölbungsradius geringfügig größer ist als der Radius einer betreffenden Kugel.

Ferner ist vorgesehen, dass die Mittelpunkte miteinander korrespondierender Laufbahnabschnitte etwa den selben Abstand zur Verdrehachse des Wälzlagers aufweisen.

Es hat sich als günstig erwiesen, dass wenigstens eine Reihe von Wälzkörpern mit kleinem Tragwinkel in axialer Richtung zwischen zwei Reihen von Wälzkörpern mit großem Tragwinkel angeordnet ist. Aus Stabilitätsgründen muß der in eine rundumlaufende, nutförmige Ausnehmung des anderen Anschlußelements hineinragende Fortsatz eine gewisse Mindesterstreckung in Richtung parallel zu der Wälzlagerdrehachse aufweisen. Demzufolge hat die freie Stirnseite dieses Fortsatzes eine gewisse Mindestbreite. Es bietet sich daher an, diesen Platz zur Unterbringung der zusätzlichen Wälzlagerreihe zu nutzen, damit die Gesamtbauhöhe des Lagers minimal bleibt.

Eine solche, zusätzliche Reihe von Wälzkörpern mit kleinem Tragwinkel kann sich etwa auf Höhe der Unterteilung des Anschlußelements mit C-förmigem Querschnitt befinden, so dass diese Wälzkörper beim Zusammenbau ohne Schwierigkeiten eingesetzt werden können.

Es liegt im Rahmen der Erfindung, dass die Anschlußelemente in axialer Richtung gegeneinander verschoben und/oder derart ausgebildet sind, dass an einer Grundseite des Wälzlagers die Stirnseite eines Anschlußelements erhaben ist, bspw. die Stirnseite des äußeren Anschlußelements, an der gegenüberliegenden Grundseite dagegen die Stirnseite des anderen Anschlußelements, bspw. des radial innenliegenden Anschlußelements. Damit kann ein solches Wälzlager direkt zwischen ebenen, zueinander parallelen Flächen zweier gegeneinander verdrehbarer Anlagen- und/ oder Maschinenkomponenten eingefügt werden, ohne dass an diesen Komponenten besondere Strukturen vorzusehen wären, denn jedes ringförmige Anschlußelement liegt dann nur an einer der beiden Anlagen-und/oder Maschinenkomponenten an.

Die Erfindung bietet die Möglichkeit einer Ausgestaltung des Lagers derart, dass an einer Grundseite des Wälzlagers die Stirnseite des dort erhabenen Anschlußelements die Stirnseite des anderen Anschlußelements in radialer Richtung vollständig übergreift. Durch diese Maßnahme gelingt es eine Lagerstirnseite frei von Lagerspalten zu belassen, insbesondere indem ein ringförmiges Anschlußelement das andere an einer Grundseite des Wälzlagers vollständig umgreift.

Falls darüber hinaus ein ringförmiges Anschlußelement das andere radial innen als auch radial außen umgreift, also beidseitig, so werden die Mündungen des Lagerspalts beide zusammen in den Bereich einer gemeinsamen Lagerstirnfläche verlegt, so dass sich besonders übersichtliche Verhältnisse ergeben.

Durch Weiterverfolgung dieser Konstruktionsvorschrift läßt sich sowohl an der radial innen liegenden Mantelfläche des beidseitig umgriffenen Anschlußelements als auch an dessen radial außen liegenden Mantelfläche jeweils ein dem anderen Anschlußelement zugewandter, rundumlaufender Bereich vorsehen, dessen beide Flanken jeweils von dem anderen Anschlußelement zumindest bereichsweise umgriffen werden. Jedes Paar einander gegenüberliegender Flanken ist in der Lage, Axialkräfte und/oder Kippmomente in jeweils beiden Richtungen aufzunehmen bzw. zu übertragen, so dass durch eine solche Maßnahme ein Lager mit einer mehrfach gesteigerten, bspw. verdoppelten Belastbarkeit realisiert werden kann.

Die flankenseitig umgriffenen, rundumlaufenden Bereiche des beidseitig umgriffenen Anschlußelements können als rundumlaufende, radial nach innen einerseits und radial nach außen andererseits auf das beidseitig umgreifende Anschlußelement vorspringende Fortsätze ausgebildet sein. Dadurch erhält das beidseitig umgriffene Anschlußelement einen T-förmigen oder †-förmigen oder +- förmigen Querschnitt, wobei die beiden Enden des Querbalkens dieses Querschnitt-Elements von dem beidseitig umgreifenden Anschlußelement umgeben sind.

Besondere Vorteile erhält man, indem man dem beidseitig umgreifenden und/oder dem beidseitig umgriffenen Anschlußelement (je) einen Querschnitt erteilt, der symmetrisch zu einer zur Drehachse des Lagers parallelen Symmetrieachse ist. Diese Maßnahme gewährleistet bei gleichmäßiger Geometrie der jeweils äußeren und der jeweils inneren Hälften eine gleichmäßige Kraftverteilung innerhalb der Lagerringe, so dass keine lokalen Überlastungen eines Lagerbereichs zu befürchten sind. Infolgedessen kann die Bauhöhe des Lagers minimiert werden.

Die Erfindung empfiehlt, dass in dem Spalt zwischen dem beidseitig umgreifenden und dem beidseitig umgriffenen Anschlußelement mindestens je zwei Paare von einander bezüglich einer mittleren Grundebene des Lagers gegenüberliegenden Wälzkörperreihen mit jeweils großem Tragwinkel vorgesehen sind. Damit werden beide Fortsätze des beidseitig umgriffenen Elements gleichermaßen zur Kraft-und Momentenübertragung herangezogen.

Weitere Vorteile bietet wenigstens eine weitere Reihe von Wälzkörpern mit großem Tragwinkel, die der Anschlußfläche des beidseitig umgriffenen Anschlußelements gegenüberliegend verläuft. Damit kann zumindest die Übertragung von axialen Druckkräften weiter gesteigert werden.

Ferner zeichnet sich die Erfindung aus durch wenigstens eine Reihe von Wälzkörpern mit kleinem Tragwinkel, die entlang der radial innen und/oder entlang der radial außen liegenden Stirnseite des beidseitig umgriffenen Anschlußelements verläuft. Da die Wälzkörperreihen mit großem Tragwinkel besonders für die Übertragung von Axialkräften und/oder Kippmomenten optimiert sind, ist eine weitere Wälzkörperreihe empfehlenswert, die in der Lage ist, zumindest in begrenztem Umfang auch Radialkräfte zu übertragen. Je nach Auslegung kann es sich hierbei um Kugeln oder Rollen handeln; auch ihr Durchmesser kann je nach Belastungsfall kleiner, etwa gleich oder größer sein als der Duchmesser der Wälzkörper mit großem Tragwinkel.

Zur Festlegung des Wälzlagers an den gegeneinander verdrehbaren Anlagenteilen sollten die Anschlußelemente kranzförmig verteilte Bohrungen aufweisen zur Aufnahme von Befestigungsschrauben. Großwälzlager können nur mit einer Vielzahl von Maschinenschrauben fixiert werden, um einerseits axiale Zugkräfte zu übertragen und andererseits eine ausreichende Normalkraft zu erzeugen zur Ausbildung eines Reibschlusses zwischen dem Wälzlager und dem angeschlossenen Anlagen- oder Maschinenteil. Die Befestigungsbohrungen können entweder als Durchgangsbohrungen ausgebildet sein, so dass die Maschinenschrauben mittels Muttern oder anderer Gewindeelemente zu kontern sind, oder es handelt sich um Sacklochbohrungen mit Innengewinde, wobei dann die Befestigungsschrauben direkt in den Bohrungen fixiert werden. Die Montage eines beidseitig, d.h. an seiner radial innen liegenden Mantelfläche als auch an seiner außen liegenden Umfangsmantelfläche, umgriffenen Anschlußelements wird erleichtert, wenn dessen Befestigungsbohrungen als mit Innengewinde versehene Sacklochbohrungen ausgebildet sind.

Der Spalt zwischen den beiden Anschlußelementen kann an beiden Grundseiten des Wälzlagers abgedichtet sein, vorzugsweise durch mindestens je einen Dichtungsring im Bereich der Abstufung zwischen dem erhabenen Anschlußelement und dem jeweils anderen Anschlußelement.

Die Erfindung läßt sich dahingehend weiterbilden, dass der Hohlraum, insbesondere Spalt, zwischen den beiden Anschlußelementen sowohl an seiner radial innen liegenden als auch an seiner radial außen liegenden Mündung durch je einen Dichtungsring abgedichtet ist. Diese beiden Dichtungsringe können jeweils an einer Mantelseite des beidseitig umgriffenen Anschlußelements anliegen sowie an dem jeweils angrenzenden, stirnseitigen Bereich des anderen Anschlußelements. Bevorzugt ist (sind) ein oder beide Dichtungsring(e) (jeweils) an einer Mantelseite des beidseitig umgriffenen Anschlußelements verankert, insbesondere durch Einlegen in eine dortige Nut. Ferner empfiehlt die Erfindung, dass ein oder beide Dichtungsring(e) (jeweils) mit einer Dichtungslippe versehen ist (sind), die an einem benachbarten Abschnitt der Stirnseite des beidseitig umgreifenden Anschlußelements anliegt, insbesondere elastisch angepreßt wird.

Eine solche Abdichtung erfüllt verschiedene Aufgaben: Einerseits werden Schmutzpartikel von den empfindlichen Wälzkörpern und Laufbahnen ferngehalten; andererseits wird ein Schmiermittel am entweichen gehindert. Es ist daher möglich, den vorzugsweise abgedichteten Spalt zwischen den beiden Anschlußelementen mit einem Schmiermittel, insbesondere mit Fett, zu füllen. Der solchermaßen abgedichtete Hohlraum zwischen den beiden Anschlußelementen kann nicht nur zum Teil, sondern auch überwiegend oder gar vollständig mit dem Schmiermittel gefüllt sein. Wenn eine oder beide Dichtungen derart ausgebildet sind, dass sie bei einem nach innen gerichteten Druck zuverlässig schließen, bei einem nach außen gerichteten Druck dagegen öffnen, zumindest dann, wenn ein Druck-Schwellwert überschritten wird, so kann verbrauchtes Schmierfett durch eine solche Dichtung entweichen, wenn neues Fett durch dafür vorgesehene Schmiernippel in den abgedichteten Hohlraum hineingepreßt wird, so dass das Nachschmieren bzw. Nachfetten ohne jegliche Demontage des Lagers erfolgen kann.

Schließlich entspricht es der Lehre der Erfindung, dass eine dem gemeinsamen Spalt abgewandte Mantelseite wenigstens eines Anschlußelements mit einer Verzahnung versehen ist. Damit ist gleichzeitig die Möglichkeit eröffnet, den Verdrehwinkel zwischen den beiden Anschlußelementen über einen Antrieb definiert vorzugeben, wobei die Antriebsachse über wenigstens ein Ritzel, Schnecke od. dgl., welches mit der Verzahnung kämmt, mit dem verzahnten Anschlußelement gekoppelt ist, während das Gehäuse des Antriebselements vorzugsweise an dem anderen Anschlußelement oder an einem damit verbundenen Maschinen- oder Anlagenteil festgelegt ist.

Weitere Merkmale, Einzelheiten, Vorteile und Wirkungen auf der Basis der Erfindung ergeben sich aus der folgenden Beschreibung bevorzugter Ausführungsformen der Erfindung sowie anhand der Zeichnung. Hierbei zeigt:

Fig. 1    einen Querschnitt durch ein erfindungsgemäßes Wälzlager, teilweise abgebrochen;

Fig. 2    eine der Fig. 1 entsprechende Darstellung einer anderen Ausführungsform der Erfindung; sowie

Fig. 3    eine abermals abgewandelte Ausführungsform der Erfindung in einer der Fig. 1 entsprechenden Darstellung.

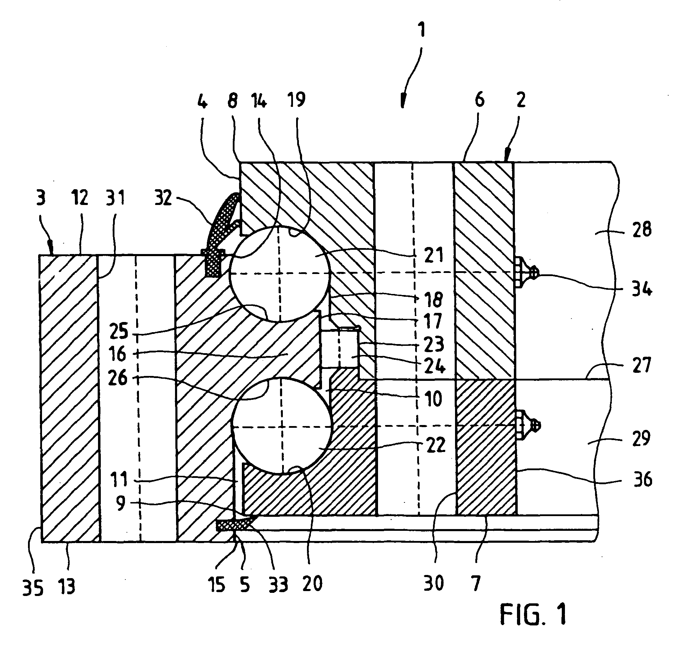

Das Wälzlager 1 aus Fig. 1 umfaßt zwei kreisringförmiges Elemente 2, 3 zum Anschluß an je eines von zwei gegeneinander verdrehbaren Anlagen- und/oder Maschinenteilen. Die beiden Anschlußelemente 2, 3 haben unterschiedliche mittlere Radien. Daher ist es möglich, die Anschlußelemente 2, 3 etwa in einer gemeinsamen Ebene anzuordnen, derart, dass das Anschlußelement 2 mit dem kleineren Radius innerhalb des Anschlußelements 3 mit dem größeren Radius liegt. Im folgenden kann deshalb auch vereinfachend von Innenring 2 und Außenring 3 gesprochen werden.

Allerdings ist der maximale Außenradius $r_{1,a,max}$ des ersten bzw. inneren Rings 2 größer als der minimale Innenradius $r_{2,i,min}$ des zweiten bzw. äußeren Rings 3. Es ergibt sich daher ein radial überlappender Bereich mit einer Überlappungsweite w:

$$w = r_{1,a,max} - r_{2,i,min}$$

Diese Überlappung kommt dadurch zustande, dass die einander zugewandten Mantelseiten 4, 5 der beiden Ringe 2, 3 jeweils rundumlaufende Erhebungen und/oder Vertiefungen aufweisen. Die außen liegende Mantelfläche 4 des Innenrings 2 bildet mit der oberen Stirnseite 6 des Innenrings 2 und mit dessen unterer Stirnseite 7 jeweils eine kreisringförmige Kante 8, 9 aus. Diese kreisförmigen Kantenlinien 8, 9 umgeben die Wälzlagerdrehachse unter vorzugsweise etwa gleichen Radien $r_{1,a,max}$, so dass der obere und der untere Abschnitt der Mantelfläche 4 miteinander fluchten bzw. auf einem gemeinsamen Kreiszylinder liegen. Dazwischen springt die Mantelfläche 4 jedoch in Richtung zur Wälzlagerdrehachse zurück bzw. bildet eine rundumlaufende, nutförmige Vertiefung 10.

Jenseits des Wälzlagerspaltes 11 schließt sich radial außerhalb der Mantelfläche 4 des Innenrings 2 der Außenring 3 mit seiner innenliegenden Mantelfläche 5 an. Diese bildet mit der oberen Stirnseite 12 des Außenrings 3 und mit dessen unterer Stirnseite 13 jeweils eine kreisringförmige Kante 14, 15 aus. Diese kreisförmigen Kantenlinien 14, 15 umgeben die Wälzlagerdrehachse unter vorzugsweise etwa gleichen Radien $r_{2,i,max}$. Dazwischen springt die Mantelfläche 5 jedoch radial nach innen in Richtung auf die Wälzlagerdrehachse zu vor bzw. bildet eine rundumlaufende, federartige Erhebung 16. Diese findet Platz innerhalb der nutförmigen Vertiefung 10, da letztere einen größeren Querschnitt aufweist als die Erhebung 16. Die radial am weitesten innen liegende Begrenzungsfläche 17 der rundumlaufenden Erhebung 16 verläuft entlang eines Zylindermantels vom Radius $r_{2,i,min}$. Da die Erhebung 16 in die Vertiefung 10 eingreift, gilt also:

$$r_{1,a,max} > r_{2,i,min}.$$

Das Wälzlager 1 weist insgesamt drei Reihen von Wälzkörpern auf. An jedem der beiden ringförmigen Anschlußelemente 2, 3 gibt es daher jeweils drei Laufbahnen, jeweils eine für jede Wälzkörperreihe. Diese drei Laufbahnen sind am Innenring 2 innerhalb der rundumlaufenden Vertiefung 10 angeordnet, am Außenring befinden sie sich allesamt an der rundumlaufenden Erhebung 16.

Die Vertiefung 10 in der Mantelfläche 4 des Innenrings 2 hat einen nutförmigen Querschnitt mit einer ringförmigen Grundfläche 18, deren Verlauf etwa durch eine zur Wälzlagerdrehachse konzentrische Zylindermantelfläche approximiert werden könnte, sowie zwei daran anschließende Flanken 19, 20, die schließlich an dem oberen bzw. unteren Abschnitt der Mantelfläche 4 münden. Diese Flanken 19, 20 bilden die Laufbahnen für je eine Reihe von Wälzkörpern 21, 22, während sich die dritte Laufbahn 23 für die dritte Reihe von Wälzkörpern 24 am Grund 18 der nutförmigen Vertiefung 10 befindet. Als Pendants zu den ersten beiden Laufbahnen 19, 20 dient jeweils eine der beiden Flanken 25, 26 der rundumlaufenden Erhebung 16 des Außenrings 3, während die dritte Laufbahn 23 ihr Gegenstück an der Begrenzungsfläche 17 der Erhebung 16 findet.

Zwischen je einer Flanke 19, 20 der Vertiefung 10 in der Außenmantelfläche 4 des Innenrings 2 und je einer Flanke 25, 26 der Erhebung 16 an der Innenmantelfläche befindet sich daher je eine Reihe von Wälzkörpern 21, 22, welche als Kugeln ausgebildet sind mit vorzugsweise jeweils gleichen Radien $r_K$. Die dafür vorgesehenen Laufbahnen 19, 20, 25, 26 haben jeweils einen Querschnitt, der entlang eines Abschnitts einer Kreislinie verläuft, jedoch mit einem Querwölbungsradius $r_{1,L}$, $r_{2,L}$, wobei gilt:

$$r_{1,L} = r_{2,L} > r_K,$$

mit

$r_{1,L}$ = Querwölbungsradius der Laufbahnen 19, 20 am Innenring 2;
$r_{1,L}$ = Querwölbungsradius der Laufbahnen 25, 26 am Außenring 3.

Allerdings ist der Unterschied minimal und mit bloßem Auge kaum wahrnehmbar; die minimale Abweichung zwischen $r_L$ einerseits und $r_K$ andererseits dient dem Zweck, die Berührungspunkte der Kugeln 21, 22 mit ihren Laufbahnen 19, 20, 25, 26 auf nahezu punktförmige Bereiche einschränken zu können, deren Lage durch die relative Lage der Mittelpunkte $M_K$, $M_{1,L}$, $M_{2,L}$ bestimmt wird.

Betrachtet man Zylinderkoordinaten z, r, deren z-Achse konzentrisch zur Wälzlagerdrehachse verläuft, während die r-Koordinate dem Abstand zu dieser Wälzlagerdrehachse entsprechen, so lassen sich die Mittelpunkte $M_K$, $M_{1,L}$, $M_{2,L}$ durch ihre z- und r-Koordinaten angeben:

$$M_K (z_{MK}, r_{MK});$$

$$M_{1,L} (z_{M1,L}, r_{M1,L});$$

$$M_{2,L} \; (z_{M2,L}, \; r_{M2,L}).$$

Anhand dieser Koordinaten läßt sich eine bevorzugte Konstruktionsvorschrift der Erfindung wie folgt definieren:

$$r_{M1,L} = r_{M2,L} = r_{MK}$$

$$z_{M1,L} - z_{M2,L} = r_{1,L} + r_{2,L} - 2 \cdot r_K$$

Dies bedeutet, die Mittelpunkte $M_K$, $M_{1,L}$, $M_{2,L}$ liegen im Idealfall allesamt auf einer gemeinsamen Zylindermantelfläche um die z-Achse/Wälzfagerdrehachse vom Radius $r_{MK}$. Demzufolge liegen auch die Mittelpunkte

$$M_{B1,o} \; (z_{B1,o}, \; r_{B1,o});$$
$$M_{B1,u} \; (z_{B1,u}, \; r_{B1,u});$$
$$M_{B2,o} \; (z_{B2,o}, \; r_{B2,o});$$
$$M_{B2,u} \; (z_{B2,u}, \; r_{B2,u});$$

der Berührungsbereiche zwischen den Wälzkörpern 21, 22 einerseits und den ihnen jeweils zugeordneten, beiden Laufbahnen 19, 20, 25, 26 andererseits jeweils auf der selben Zylindermantelfläche vom Radius $r_B$, also gilt:

$$r_{B1,o} = r_{B1,u} = r_{B2,o} = r_{B2,u} = r_B$$

und

$$r_{2,i,min} < r_{M1,L} = r_{M2,L} = r_{MK} = r_B < r_{1,a,max}.$$

Demnach verlaufen die Verbindungslinien zwischen den beiden Berührungspunkten $r_{B1,o}$, $r_{B2,o}$ bzw. $r_{B1,u}$, $r_{B2,u}$ einer Kugel 21, 22 mit ihren beiden Laufbahnen 19, 25 bzw. 20, 26 parallel zur z-Achse des Wälzlagers 1, d.h., sie schneidet die von der z-Achse lotrecht durchsetzte Grundebene des Wälzlagers 1 unter einem Winkel von 90°. Dieser Winkel entspricht dem Tragwinkel der beiden Wälzkörperreihen 21, 22 des Wälzlagers 1.

Die Querschnitte der Laufbahnen 19, 20, 25, 26 umgeben die betreffende Kugel 21, 22 jeweils auf einem Umfangswinkel von mehr als 90°, vorzugsweise mehr als 105°, insbesondere mehr als 120°. Andererseits sollte der Umfangswinkel, entlang dem die Querschnitte der Laufbahnen 19, 20, 25, 26 die betreffende Kugel 21, 22 umgeben, jeweils kleiner sein als 180°, vorzugsweise kleiner als 165°, insbesondere kleiner als 150°. In der Zeichnung ist ein mittlerer Wert für diesen Winkel von etwa 135° wiedergegeben. Die Laufbahnen 19, 20, 25, 26 nehmen dabei etwa die gesamte Radialerstreckung der betreffenden Flanken 19, 20, 25, 26 ein, von der betreffenden Mantelfläche 4, 5 bis zu dem Grund 18 der Vertiefung 10 bzw. bis zu der radial innenliegenden Begrenzungsfläche 17 der Erhebung 16. Die Laufbahnenquerschnitte 19, 20 an dem Innenring 2 gehen dabei tangential in die Grundfläche 18 der Vertiefung 10 über, während die Laufbahnenquerschnitte 25, 26 an dem Außenring 3 etwa tangential in die anschließenden Bereiche der Mantelfläche 5 übergehen.

Die Wälzkörper 24 der dritten Reihe haben bei der Ausführungsform gemäß Fig. 1 eine rollenförmige, insbesondere zylinderförmige Gestalt, mit einer zu der Wälzlagerdrehachse parallelen Zylinderachse und mit einem Radius $r_R$, der vorzugsweise kleiner ist als der Kugelradius $r_K$. Diese Rollen 24 wälzen sich einerseits auf der radial innen liegenden Begrenzungsfläche 17 des Vorsprungs 16 an dem Außenring 3 ab, andererseits auf der Laufbahn 23 am Grund 18 der Vertiefung 10. Zur axialen Führung der Rollen 24 in Richtung der z-Achse ist die Laufbahn 23 als in den Grund 18 der Vertiefung 10 eingelassene, kleinere, rundumlaufende Vertiefung ausgebildet, mit etwa rechteckigem Querschnitt. Diese Laufbahnvertiefung 23 befindet sich etwa mittig auf der Grundfläche 18 der Vertiefung 10, in etwa gleichen Abständen zu den Flanken 19, 20 der Vertiefung 10. Die axiale Erstreckung der Laufbahnvertiefung 23 entlang der z-Achse ist etwas größer als die entsprechende Erstreckung der Rollen 24. Die Flanken der Laufbahnvertiefung 23 haben nicht die Aufgabe, Kräfte zu übertragen. Der einzige Zweck der dritten Wälzkörperreihe 24 besteht darin, Radialkräfte zwischen deb beiden Anschlußelementen 2, 3 zu übertragen bzw. dieselben gegenseitig zu zentrieren. Der Tragwinkel der Rollen 24 ist demnach etwa 0°.

Um die Anschlußelemente 2, 3 zu dem fertigen Wälzlager 1 zusammensetzen zu können, wobei der rundumlaufende Fortsatz 16 in die rundumlaufende Vertiefung 10 eingreift, ist der Ring 2 mit der Vertiefung 10 geteilt ausgebildet, und zwar entlang einer quer zur Wälzlagerdrehachse verlaufenden Grundebene 27 des Lagers 1. Diese Ebene 27 läuft knapp ober- bzw. unterhalb der dritten Laufbahn 23 entlang. Die beiden Hälften des Innenrings 2 - der obere Ring 28 und der untere Ring 29 - können mittels Schrauben aneinander festgelegt werden, nachdem dazwischen der Außenring 3 und ggf. auch die durch Käfige zusammengehaltenen Wälzkörperreihen 21, 22, 24 eingefügt wurden.

Die axialen Erstreckungen der beiden Anschlußelemente 2, 3 in Richtung der Wälzkörperdrehachse sind etwa gleich groß; jedoch sind die beiden Anschlußelemente 2, 3 in Richtung der z-Achse geringfügig gegeneinander versetzt, so dass die obere Stirnseite 6 eines Rings - vorzugsweise des Innenrings 2 - erhaben gegenüber der oberen Stirnseite 7 des anderen Rings - vorzugsweise des Außenrings 3 - ist. Dafür überragt dessen untere Stirnseite 13 die untere Stirnseite des ersten Rings - vorzugsweise des Innenrings 2 - nach unten. Die jeweils erhabenen Stirnseiten 6, 13 bilden die beiden Anschlußflächen des Wälzlagers 1, an denen je eine der beiden gegeneinander zu verdrehenden Anlagen- oder Maschinenkomponenten festlegbar sind. Hierzu dienen jeweils eine Mehrzahl von kranzförmig entlang der Anschlußelemente 2, 3 angeordnete Befestigungsbohrungen 30, 31, zum Hindurchstecken je einer Befestigungsschraube. Bei den Befestigungsbohrungen 30, 31 kann es sich - wie in Fig. 1 dargestellt - jeweils um Durchgangsbohrungen handeln oder um mit einem Innengewinde versehene Sacklochbohrungen.

Der Spalt 11 zwischen den Anschlußelementen 2, 3 in den Bereichen zwischen den oberen beiden Stirnseiten 6, 12 einerseits und zwischen den unteren beiden Stirnseiten 7, 13 andererseits abgedichtet. Vorzugsweise werden dazu zwei Dichtungsringe 32, 33 verwendet, die jeweils an einem Anschlußelement 2, 3 festgelegt sind, vorzugsweise durch Eingriff eines Verankerungsfortsatzes in einer Verankerungsnut desselben Anschlußelements 2, 3, wobei der Verankerungsfortsatz einen größeren Querschnitt aufweist als die dafür vorgesehene Verankerungsnut und durch elastische Deformierung darin verankert wird. Andererseits liegen die Dichtungsringe 32, 33 an dem jeweils anderen Anschlußelement 2, 3 an, vorzugsweise mittels wenigstens einer dafür vorgesehenen Dichtlippe, die dank einer federnden oder elastischen Eigenschaft der Dichtungsringe 32, 33 an der Oberfläche des betreffenden Anschlußelements 2, 3 angepreßt wird. Für die Platzierung der Dichtringe 32, 33 - also für deren Verankerungsfortsatz einerseits und deren Dichtlippe(n) andererseits - kommt vor allem die jeweils nicht erhabene Stirnseite 7, 12 der Anschlußelemente 2, 3 in Betracht und/oder eine oder beide, einander zugewandte Mantelflächen 4, 5 der Anschlußelemente 4, 5. Bei der in Fig. 1 dargestellten Ausführungsform befinden sich die Verankerungsnuten zur Festlegung der beiden Dichtungsringe beide am Außenring 3.

Der durch die beiden Dichtungsringe 32, 33 abgeschlossene Hohlraum, im Bereich des Spaltes 11 ist mit einem Schmiermittel gefüllt, vorzugsweise mit Schmierfett, das bspw. über Schmiernippel 34 einfüllbar ist. Die Elastizität der Dichtungsringe 32, 33 ist so eingestellt, dass sie bei einem Überdruck von außen hin zum Spalt 11 durch Formschluß anliegen, bei entgegengesetztem Druck von innen nach außen dagegen bei Überschreitung eines Grenzwertes öffnen können, so dass beim Einpressen eines neuen Schmiermittels das alte entlang der Dichtlippen der Dichtungsringe 32, 33 entweichen kann.

Nicht dargestellt ist, dass an der dem Spalt 11 abgewandten Mantelfläche 35 des ungeteilten Rings - in der Ausführungsform gemäß Fig. 1 des Außenrings 3 - eine rundumlaufende Verzahnung vorgesehen sein kann als Angriffspunkt für ein Antriebsritzel oder eine Antriebsschnecke. Da zum Angriff einer Schnecke nur der Außenring 3 geeignet ist, wird eine geteilte Ausführung des Innenrings 2 bevorzugt, demzufolge also die Vertiefung 10 am Innenring 2 und der Fortsatz 16 am Außenring 3. Die Schmiernippel 34 befinden sich dann bevorzugt an der dem Spalt abgewandten Mantelseite des unverzahnten Anschlußelements 2, 3 - bei der Ausführungsform gemäß Fig. 1 demnach an der Innenseite 36 des Innenrings 2.

Wenn eine Verzahnung des Außenrings 3 nicht erforderlich ist, lassen sich die obigen geometrischen Zusammenhänge aber auch umkehren, indem anstelle der Vertiefung 10 in der Außenmantelfläche 4 des Innenrings 2 eine Vertiefung 10' in der Innenmantelfläche 5 des Außenrings 3 angeordnet wird und statt einer Erhebung 16 an der Innenmantelfläche 5 des Außenrings 3 eine Erhebung 16' an der Außenmantelfläche 4 des Innenrings 2. Dabei kann die Geometrie der Erhebung 16' vollständig der Geometrie der Erhebung 16 entsprechen, und die Geometrie der Vertiefung 10' vollständig der Geometrie der Vertiefung 10, ohne dass dadurch die Funktion der Anordnung beeinträchtigt würde.

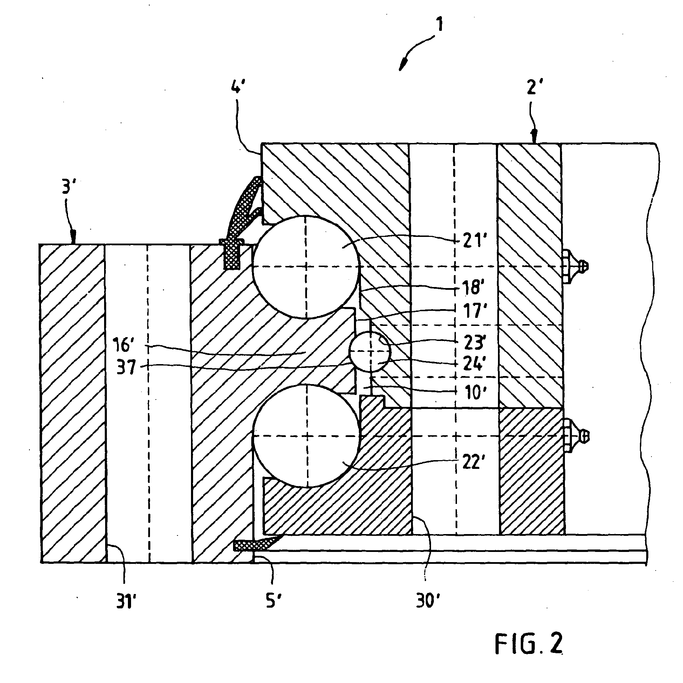

Die Ausführungsform 1' nach Fig. 2 unterscheidet sich von der nach Fig. 1 vor allem dadurch, dass die Wälzkörper 24' der dritten Wälzkörperreihe, welche sich in axialer Richtung zwischen den anderen beiden Wälzkörperreihen 21, 22 befindet, nicht rollen-, sondern kugelförmig ausgebildet sind, wobei der Radius der Kugeln 24' kleiner ist als der Radius $r_K$ der Kugeln 21, 22. Die Laufbahn 23' hat demnach die Gestalt eines Kreisausschnittes. Außerdem ist in der Stirnseite 17' des Fortsatzes 16' eine ebenfalls kreissegmentförmige Laufbahn 37 vorgesehen. Dabei sind die Laufbahnen 23', 37 derart aufeinander und auf den Radius der Kugeln 24' abgestimmt, dass deren Tragwinkel etwa 0° beträgt.

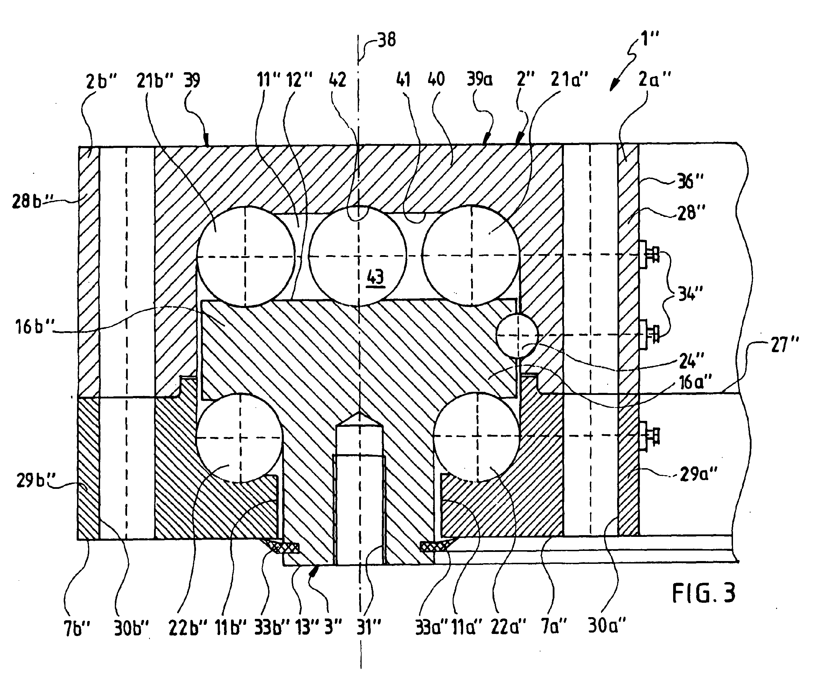

Die Lagerausführungsform 1" nach Fig. 3 stellt eine Weiterbildung des Wälzlagers 1' aus Fig. 2 dar. Hier gibt es anstelle eines Innenrings 2' und eines Außenrings 3' einen sowohl innen als auch außen, also beidseitig, umgriffenen Ring 3" und einen diesen beidseitig umgreifenden Ring 2". Ein Querschnitt durch diese beiden Ringe 2", 3" zeigt eine fast vollkommene Symmetrie bezüglich einer zu der Verdrehachse des Lagers 1" parallelen Mittelachse 38. Dabei entspricht die in Fig. 3 rechte Hälfte 39a des Querschnitts dem radial weiter innen liegenden Teil des Lagers 1", die linke Querschnittshälfte 39b aus Fig. 3 dagegen dem radial weiter innen liegenden Teil des Lagers 1"; beide ringförmigen Anschlußelemente 2", 3" haben jedoch etwa gleiche Anteile an diesen beiden Lagerquerschnittsbereichen 39a, 39b.

Ein Vergleich der rechten bzw. radial innen liegenden Querschnittshälfte 39a des Lagers 1" aus Fig. 3 mit dem Lager 1' aus Fig. 2 zeigt, dass diese Bereiche bis auf unwesentliche Details (Lage der Schmiernippel, etc.) identisch miteinander sind. Insbesondere ist die Unterteilung des innersten, umgreifenden Ringabschnitts 2a" entlang einer zur Grundebene des Lagers 1" parallelen Ebene 27" in einen oberen Ringabschnitt 28a" und einen unteren Ringabschnitt 29a" zu erkennen, welche beide durchsetzt werden von sich zu jeweils durchgehenden Befestigungsbohrungen 30a" ergänzenden, achsparallelen Ausnehmungen; ferner ein radial nach innen vorspringender Fortsatz 16a" an dem umgriffenen Anschlußelement 3", darüber hinaus die in axialer Richtung gegeneinander versetzten Wälzkörperreihen 21 a" und 22a" mit großem Tragwinkel und eine dazwischen angeordnete Wälzkörperreihe 24" mit kleinem Tragwinkel, sowie schließlich ein Dichtungsring 33a" im Bereich der Mündung eines Spaltabschnitts 11 a".

Wie Fig. 3 weiter zeigt, gibt es zu fast all diesen Elementen in der rechten Querschnittshälfte 39a je ein dazu symmetrisches Pendant in der linken bzw. radial äußeren Querschnittshälfte 39b: Der äußerste Ringabschnitt 2b" ist entlang der Ebene 27" unterteilt in einen oberen Ringabschnitt 28b" und einen unteren Ringabschnitt 29b", welche von gemeinsamen Durchgangsausnehmungen 30b" durchsetzt werden; das beidseitig umgriffene Anschlußelement 3" weist einen nach radial außen vorspringenden Fortsatz 16b" auf; in dem Spaltabschnitt 11b" gibt es zwei in axialer Richtung gegeneinander versetzte Wälzkörperreihen 21b" und 22b" mit großem Tragwinkel und einen Dichtungsring 33b" im Bereich der Mündung des Spaltes 11b". Lediglich ein Pendant zu der Wälzkörperreihe 24" mit kleinem Tragwinkel fehlt, wie auch ggf. Pendants zu den Schmiernippeln 34".

Die beiden, in entgegengesetzte Richtungen - nämlich radial nach außen einerseits und radial nach innen andererseits - weisenden Vorsprünge 16a", 16b" schließen sich direkt an eine Stirnseite 12" des beidseitig umgriffenen Anschlußelements 3" an und verleihen diesem Anschlußelement 3" daher einen etwa T-förmigen Querschnitt.

Diese Stirnseite 12" des beidseitig umgriffenen Anschlußelements 3" wird vollständig umschlossen von einem Verbindungsbereich 40 zwischen den beiden Ringhälften 2a", 2b" des beidseitig umgreifenden Anschlußelements 2". Die der Stirnseite 12" zugewandte Innenseite 41 dieses Verbindungsbereichs 40 verläuft parallel zu der Stirnseite 12" des beidseitig umgriffenen Anschlußelements 3". Mittig auf der Symmetrieachse 38 weisen die beiden einander gegenüberliegenden Stirnseiten 12", 41 je eine Laufbahn-Vertiefung 42 für eine weitere Wälzkörperreihe 43 mit großem Tragwinkel auf. Daher befinden sich auf dieser Ebene drei Wälzkörperreihen 21a", 21b", 43 konzentrisch zueinander.

Die Wälzkörper 21 a", 21b", 43 dieser drei Reihen sind etwa, vorzugsweise jedoch genau gleich groß, so dass die Tragkraft des Lagers 1" in axialer Druckrichtung gegenüber dem Lager 1' etwa verdreifacht ist; die übertragbare axiale Zugkraft ist aufgrund der doppelten Anzahl der unteren Wälzkörperreihen 22a", 22b" etwa doppelt so groß wie bei dem Lager 1', während die maximale Radialkraft etwa genau so groß ist wie bei dem Lager 1'aus Fig. 2 mit entsprechender Baugröße.

Während das beidseitig umgreifende Anschlußelement 2" nun zwei Kränze von durchgehenden Befestigungsbohrungen 30a", 30b" aufweist, findet sich an dem beidseitig umgriffenen Anschlußelement 3" vorzugsweise nur ein Kranz von Befestigungsausnehmungen 31", bevorzugt genau bei dem selben radialen Abstand zu der Verdrehachse des Lagers 1" wie die Symmetrieachse 38, obwohl natürlich auch mehrere solche kranzförmige Lochreihen vorhanden sein könnten. Jedenfalls sind diese Befestigungsausnehmungen vorzugsweise 31" nicht als Durchgangsausnehmungen ausgebildet, sondern als Sacklochbohrungen, welche zu der Anschlußfläche 13" hin offen sind und mit einem Innengewinde versehen sind.

Entsprechend der symmetrischen Querschnittshälften 39a, 39b gibt es nun auch zwei Dichtungsringe 33a", 33b" zu beiden Seiten der Anschlußfläche 13" des beidseitig umgriffenen Anschlußelements 3". Diese sind vorzugsweise symmetrisch zueinander aufgebaut und jeweils in einer Nut im betreffenden Mantel des beidseitig umgriffenen Anschlußelements 3" verankert; ihre Dichtungslippe wird jeweils elastisch an die untere Stirnseite 7a", 7b" gepreßt.

Der dadurch vollständig geschlossene Spalt 11" ist mit Schmiermittel, vorzugsweise mit Schmierfett, gefüllt. Zum Nachfüllen des Schmierfettes sind Schmiernippel 34" vorgesehen, vorzugsweise an einer zugänglichen Mantelseite 36" des beidseitig umgreifenden Anschlußelements 2". An der gegenüberliegenden Mantelseite dieses Anschlußelements 2" kann bei Bedarf ein rundumlaufender Zahnkranz vorgesehen sein.

**Patentansprüche**

1. Wälzlageranordnung (1;1';1"), vorzugsweise Großwälzlager mit einem Durchmesser von 0,5 m oder mehr, bspw. für eine Drehverbindung, insbesondere im Rahmen einer Windkraftblattlagerung, mit zwei konzentrisch zueinander sowie zumindest bereichsweise ineinander angeordneten, ringförmigen Elementen (2,3) zum Anschluß an je eines von zwei gegeneinander verdrehbaren Anlagenteilen, sowie mit einem Spalt (11) zwischen diesen Anschlußelementen (2,3), so dass sie um eine gedachte, zur Ringebene etwa lotrechte Achse im Zentrum der ringförmigen Anschlußelemente (2,3) gegeneinander verdrehbar sind, wobei im Bereich des Spaltes (11) zwischen den Anschlußelementen (2,3) wenigstens zwei Reihen von Wälzkörpern (21,22;24,24") vorgesehen sind, **dadurch gekennzeichnet, dass**

   a) die ringförmigen Anschlußelemente (2,3) einander in radialer Richtung ganz oder teilweise überlappen,
   b) und eine oder mehrere Laufbahnen (19,20,25,26) für kugelförmige Wälzkörper (21,22) in radial überlappenden Bereichen (10,16) der ringförmigen Anschlußelemente (2,3) angeordnet sind, derart, dass der Tragwinkel, den die Verbindungslinie zwischen den Zentren der Berührungspunkte eines Wälzkörpers (21,22) mit dessen beiden Laufbahnen (19,25;20,26) gegenüber der Ringebene einschließt, gleich oder größer ist als 75°, bspw. gleich oder größer als 80°, vorzugsweise gleich oder größer als 85°, insbesondere gleich oder größer als 88° oder näherungsweise exakt 90°,
   c) und wobei die Wälzkörper (24,24") wenigstens einer Reihe einen Tragwinkel von 15° oder weniger haben, bspw. 10° oder weniger, vorzugsweise 5° oder weniger, insbesondere 2° oder weniger .

2. Wälzlageranordnung nach Anspruch 1, **dadurch gekennzeichnet, dass** die Querschnitte der Laufbahnen (19,20,25,26) die betreffende Kugel (21,22) auf einem Umfangswinkel von mehr als 90° umgeben.

3. Wälzlageranordnung nach Anspruch 1 oder 2, **dadurch gekennzeichnet, dass** ein ringförmiges Anschlußelement (2,3) wenigstens einen dem anderen zugewandten; rundumlaufenden Bereich (10,16) aufweist, wobei wenigstens eine Flanke (19,20;25,26) desselben von dem anderen Anschlußelement (2,3) zumindest bereichsweise umgriffen wird, und/oder dessen beide Flanken (19,20;25,26) von dem anderen Anschlußelement (2,3) zumindest bereichsweise umgriffen werden.

4. Wälzlageranordnung nach einem der vorhergehenden Ansprüche, **dadurch gekennzeichnet, dass** ein von dem anderen Anschlußelement (2,3) flankenseitig umgriffener, rundumlaufender Bereich eines Anschlußelements (2,3) als rundumlaufender, in radialer Richtung auf das andere Anschlußelement (2,3) vorspringender Fortsatz (16) ausgebildet ist, wobei vorzugsweise die umgriffene(n) Flanke(n) (25,26) wenigstens eines rundumlaufenden Fortsatzes (16) als Laufbahn(en) für Wälzkörper (21,22) ausgebildet sind, und/oder in der Stirnseite (17) wenigstens eines Fortsatzes (16) wenigstens eine Laufbahn für wenigstens eine weitere Reihe von Wälzkörpern (24;24") vorgesehen ist.

5. Wälzlageranordnung nach einem der vorhergehenden Ansprüche, **dadurch gekennzeichnet, dass** ein ringförmiges Anschlußelement (2,3) einen etwa C-förmigen Querschnitt aufweist mit wenigstens zwei dem anderen Anschlußelement (2,3) zugewandten, rundumlaufenden Bereichen (4), in deren Zwischenraum (10) sich ein Bereich des anderen Anschlußelementes (2,3) erstreckt, wobei vorzugsweise an zwei einander zugewandten Innenflächen (19,20) des Anschlußelements (2,3) mit C-förmigem Querschnitt je eine Laufbahn für eine Reihe von Wälzkörpern (21,22) angeordnet ist, und/oder im Bereich wenigstens einer Vertiefung (10) zwischen zwei erhabenen Bereichen (4) des Anschlußelements (2,3) mit C-förmigem Querschnitt wenigstens eine Laufbahn (23,23") für wenigstens eine weitere Reihe von Wälzkörpern (24,24") vorgesehen ist.

6. Wälzlageranordnung nach einem der vorhergehenden Ansprüche, **gekennzeichnet durch** wenigstens zwei Reihen von Wälzkörpern (21,22), die jeweils einen Tragwinkel von 75° oder mehr haben, bspw. 80° oder mehr, vorzugsweise 85° oder mehr, insbesondere 88° oder mehr.

7. Wälzlageranordnung nach einem der vorhergehenden Ansprüche, **dadurch gekennzeichnet, dass** die Wälzkörper (24,24") mit einem kleinen Tragwinkel als Rollen, Tonnen oder Kugeln ausgebildet sind.

8. Wälzlageranordnung nach einem der vorhergehenden Ansprüche, **dadurch gekennzeichnet, dass** wenigstens eine Reihe von Wälzkörpern (24;24") mit kleinem Tragwinkel in axialer Richtung zwischen zwei Reihen von Wälzkörpern (21,22) mit großem Tragwinkel angeordnet ist.

9. Wälzlageranordnung nach einem der vorhergehenden Ansprüche, **dadurch gekennzeichnet, dass** an einer Grundseite des Wälzlagers (1) die Stirnseite des dort erhabenen Anschlußelements (2,3) die Stirnseite des anderen Anschlußelements (2,3) in radialer Richtung vollständig übergreift.

10. Wälzlageranordnung nach einem der vorhergehenden Ansprüche, **dadurch gekennzeichnet, dass** ein ringförmiges Anschlußelement (2") das andere Anschlußelement (3") an einer Grundseite des Wälzlagers (1) vollständig umgreift.

11. Wälzlageranordnung nach einem der vorhergehenden Ansprüche, **dadurch gekennzeichnet, dass** ein ringförmiges Anschlußelement (2") das andere Anschlußelement (3") radial innen als auch radial außen umgreift.

12. Wälzlageranordnung nach Anspruch 11, **dadurch gekennzeichnet, dass** das beidseitig umgriffene Anschlußelement (3") an seiner radial innen liegenden sowie an seiner radial außen liegenden Mantelfläche jeweils einen dem anderen Anschlußelement 2") zugewandten, rundumlaufenden Bereich (16a";16b") aufweist, dessen beide Flanken von dem anderen Anschlußelement (2") zumindest bereichsweise umgriffen werden.

13. Wälzlageranordnung nach einem der Ansprüche 11 oder 12, **dadurch gekennzeichnet, dass** die von dem beidseitig umgreifenden Anschlußelement (2") flankenseitig umgriffenen, rundumlaufenden Bereiche des beidseitig umgriffenen Anschlußelements (3") als rundumlaufende, radial nach innen einerseits und radial nach außen andererseits auf das beidseitig umgreifende Anschlußelement (2") vorspringende Fortsätze (16a",16b) ausgebildet sind.

14. Wälzlageranordnung nach einem der Ansprüche 11 bis 13, **dadurch gekennzeichnet, dass** das beidseitig umgriffene Anschlußelement (3") einen T-förmigen oder t-förmigen oder +-förmigen Querschnitt aufweist, wobei beide Enden des Querbalken von dem beidseitig umgreifenden Anschlußelement (2") umgriffen werden.

15. Wälzlageranordnung nach einem der Ansprüche 11 bis 14, **dadurch gekennzeichnet, dass** das beidseitig umgreifende und/oder das beidseitig umgriffene Anschlußelement (2",3") je einen Querschnitt aufweisen, der symmetrisch zu einer zur Drehachse des Lagers (1) parallelen Symmetrieachse (38) ist.

16. Wälzlageranordnung nach einem der Ansprüche 11 bis 15, **dadurch gekennzeichnet, dass** in dem Spalt (11") zwischen dem beidseitig umgreifenden und dem beidseitig umgriffenen Anschlußelement (2",3") mindestens je zwei Paare von einander bezüglich einer mittleren Grundebene des Lagers (1) gegenüberliegenden Wälzkörperreihen (21a",22a";21b",22b") mit jeweils großem Tragwinkel vorgesehen sind.

17. Wälzlageranordnung nach einem der Ansprüche 11 bis 16, **gekennzeichnet durch** wenigstens eine weitere Reihe von Wälzkörpern (43) mit großem Tragwinkel, die der Anschlußfläche (13") des beidseitig umgriffenen Anschlußelements (3") gegenüberliegend verläuft.

18. Wälzlageranordnung nach einem der Ansprüche 11 bis 17, **gekennzeichnet durch** wenigstens eine Reihe von Wälzkörpern (24") mit kleinem Tragwinkel, die entlang der radial innen oder entlang der radial außen liegenden Stirnseite des beidseitig umgriffenen Anschlußelements (3") verläuft.

19. Wälzlageranordnung nach einem der vorhergehenden Ansprüche, **dadurch gekennzeichnet, dass** der Hohlraum, insbesondere Spalt (11), zwischen den beiden Anschlußelementen (2,3) an seinen beiden, ringförmigen Mündungen abgedichtet ist, vorzugsweise durch je einen Dichungsring (38a", 39b").

20. Wälzlageranordnung nach Anspruch 19, **dadurch gekennzeichnet, dass** die beiden Dichtungsringe (33a",33b") jeweils an einer Mantelseite des beidseitig umgriffenen Anschlußelements (3") anliegen sowie an dem jeweils angrenzenden, stirnseitigen Bereich des anderen Anschlußelements (2").

21. Wälzlageranordnung nach Anspruch 19 der 20, **dadurch gekennzeichnet, dass** ein oder beide Dichtungsringe (33a",33b") jeweils an einer Mantelseite des beidseitig umgriffenen Anschlußelements (3") verankert ist bzw. sind, insbesondere durch Einlegen in eine dortige Nut.

22. Wälzlageranordnung nach einem der vorhergehenden Ansprüche, **dadurch gekennzeichnet, dass** der abgedichtete Hohlraum (11;11';11") zwischen den beiden Anschlußelementen (2,3) mit einem Schmiermittel, insbesondere mit Fett, ganz oder zumindest überwiegend gefüllt ist.

**Claims**

1.  A rolling bearing arrangement (1; 1'; 1"), preferably a large rolling bearing having a diameter of 0.5 m or more, for example for a rotary joint, particularly in the context of a blade bearing for a wind power installation, comprising two annular elements (2, 3) arranged mutually concentrically and at least regionally inside each other, for connection each to a respective one of two oppositely rotatable system components, and comprising a gap (11) between said connecting elements (2, 3), such that they are able to rotate in opposite directions about an imaginary axis located at the center of said annular connecting elements (2, 3) and extending approximately perpendicular to the ring plane, there being at least two rows of rolling bodies (21, 22; 24, 24") provided in the region of said gap (11) between said connecting elements (2, 3), **characterized in that**

    a) said annular connecting elements (2, 3) completely or partially overlap each other in the radial direction,
    b) and one or more raceways (19, 20, 25, 26) for ball-shaped rolling bodies (21, 22) are arranged in radially overlapping regions (10, 16) of said annular connecting elements (2, 3), such that the contact angle which the connecting line between the centers of the points of contact of a rolling body (21, 22) with its two raceways (19, 25; 20, 26) makes with the ring plane is equal to or greater than 75°, for example equal to or greater than 80°, preferably equal to or greater than 85°, particularly equal to or greater than 88° or approximately exactly 90°,
    c) and wherein [sic] said rolling bodies (24, 24") of at least one said row have a contact angle of 15° or less, for example 10° or less, preferably 5° or less, particularly 2° or less.

2.  The rolling bearing arrangement as in claim 1, **characterized in that** the cross sections of the raceways (19, 20, 25, 26) surround the associated ball (21, 22) at a circumferential angle of more than 90°.

3.  The rolling bearing arrangement according to claim 1 or 2, **characterized in that** an annular connecting element (2, 3) has at least one circumferential region (10; 16) that faces the other, whereby at least one flank (19, 20; 25, 26) of that is embraced at least regionally by said other connecting element (2, 3), and/or both flanks (19, 20; 25, 26) of which are embraced at least regionally by said other connecting element (2, 3).

4.  The rolling bearing arrangement according to one of the preceding claims, **characterized in that** a region of one said connecting element (2, 3) that is embraced flankwise by said other connecting element (2, 3) is configured as a circumferential projection (16) that projects in the radial direction toward the other said connecting element (2, 3), whereby preferably the embraced flank(s) (25, 26) of at least one said circumferential projection (16) are configured as a raceway or raceways for rolling bodies (21, 22), and/or at least one raceway for at least one further row of rolling bodies (24; 24") is provided in the end face (17) of at least one said projection (16).

5.  The rolling bearing arrangement according to one of the preceding claims, **characterized in that** one said annular connecting element (2, 3) has a roughly C-shaped cross section having at least two circumferential regions (4) which face the other said connecting element (2, 3) and into the intervening space (10) between which a region of the other said connecting element (2, 3) extends, whereby preferably a respective raceway for a row of rolling bodies (21, 22) is disposed on each of two mutually facing inner surfaces (19, 20) of said connecting element (2, 3) of C-shaped cross section, and/or at least one raceway (23, 23") for at least one further row of rolling bodies (24, 24") is provided in the region of at least one depression (10) between two raised regions (4) of said connecting element (2, 3) of C-shaped cross section.

6.  The rolling bearing arrangement according to one of the preceding claims, **characterized by** at least two rows of rolling bodies (21, 22) each having a contact angle of 75° or more, for example 80° or more, preferably 85° or more, particularly 88° or more.

7.  The rolling bearing arrangement according to one of the preceding claims, **characterized in that** said low-contact-angle rolling bodies (24, 24") are configured as rollers, drums or balls.

8.  The rolling bearing arrangement according to one of the preceding claims, **characterized in that** at least one said row of low-contact-angle rolling bodies (24; 24") is disposed in the axial direction between two said rows of high-contact-angle rolling bodies (21, 22).

9.  The rolling bearing arrangement according to one of the preceding claims, **characterized in that** on one base side of said rolling bearing (1), the end face of the said connecting element (2, 3) that is raised on that side completely embraces in the radial direction the end face of the other said connecting element (2, 3).

**10.** The rolling bearing arrangement according to one of the preceding claims, **characterized in that** one said annular connecting element (2") completely embraces the other said connecting element (3") on one base side of said rolling bearing (1).

**11.** The rolling bearing arrangement according to one of the preceding claims, **characterized in that** one said annular connecting element (2") embraces the other said connecting element (3") both radially inwardly and radially outwardly.

**12.** The rolling bearing arrangement according to claim 11, **characterized in that** said bilaterally embraced connecting element (3") has on its radially inward jacket surface and on its radially outward jacket surface a respective circumferential region (16a"; 16b") that faces the other said connecting element and both of whose flanks are embraced at least regionally by the other said connecting element (2").

**13.** The rolling bearing arrangement according to one of claims 11 or 12, **characterized in that** said circumferential regions of said bilaterally embraced connecting element (3") that are embraced flankwise by said bilaterally embracing connecting element (2") are configured as circumferential projections (16a", 16b") that project both radially inward, on the one side, and radially outward, on the other side, toward said bilaterally embracing connecting element (2").

**14.** The rolling bearing arrangement according to one of claims 11 to 13, **characterized in that** said bilaterally embraced connecting element (3") has a T-shaped or †-shaped or +-shaped cross section, both ends of the crossbar being embraced by said bilaterally embracing connecting element (2").

**15.** The rolling bearing arrangement according to one of claims 11 to 14, **characterized in that** the bilaterally embracing and/or the bilaterally embraced connecting element (2", 3") each has a cross section that is symmetrical with respect to an axis of symmetry (38) that is parallel to an axis of rotation of said bearing (1 ").

**16.** The rolling bearing arrangement according to one of claims 11 to 15, **characterized in that** provided in the gap (11") between said bilaterally embracing and said bilaterally embraced connecting element (2", 3") are at least two pairs of high-contact-angle rows (21 a", 22a"; 21b", 22b") of rolling bodies, which rows are disposed opposite each other with reference to a central base plane of said bearing (1").

**17.** The rolling bearing arrangement according to one of claims 11 to 16, **characterized by** at least one further row of high-contact-angle rolling bodies (43), which row extends on the opposite side of said bilaterally embraced connecting element (3") from its connection face (13").

**18.** The rolling bearing arrangement according to one of claims 11 to 17, **characterized by** at least one row of low-contact-angle rolling bodies (24"), which row extends along the radially inward or the radially outward end face of said bilaterally embraced connecting element (3").

**19.** The rolling bearing arrangement according to one of the preceding claims, **characterized in that** the cavity, particularly said gap (11), between the two said connecting elements (2, 3) is sealed at both of its annular orifices.

**20.** The rolling bearing arrangement according to claim 19, **characterized in that** said two sealing rings (33a", 33b") each rest against a jacket side of said bilaterally embraced connecting element (3") and against the particular adjacent end-face region of the other said connecting element (2").

**21.** The rolling bearing arrangement according to claim 19 or 20, **characterized in that** one or both sealing ring/s (33a", 33b") is or are anchored each to a respective jacket side of said bilaterally embraced connecting element (3"), particularly by being seated in a groove provided there.

**22.** The rolling bearing arrangement according to one of the preceding claims, **characterized in that** the sealed said cavity (11; 11'; 11 ") between the two said connecting elements (2, 3) is completely or at least predominantly filled with a lubricant, particularly with grease.

**Revendications**

**1.** Disposition de paliers à roulements (1 ; 1' ; 1" ), de préférence de paliers à roulements géants d'un diamètre de 0,5 m ou plus, par exemple pour un raccord rotatif, en particulier dans le bâti d'un palier de pale d'éolienne, avec deux éléments (2, 3) annulaires qui sont disposés concentriquement les uns par rapport aux autres et au moins partiellement les uns dans les autres pour le raccordement respectivement à l'une des deux parties d'installation avec possibilité de rotation l'une par rapport à l'autre, ainsi qu'avec un espace (11) entre ces éléments de raccordement (2, 3), de façon à ce qu'ils puissent effectuer une rotation l'un par rapport à l'autre autour d'un axe imaginaire approximativement perpendiculaire au plan d'anneau au centre des éléments de raccordement (2, 3) annulaires, où au moins deux rangées de corps de roulements (21, 22 ; 24, 24") sont prévues dans la zone de l'espace (11) entre les éléments de raccordement (2, 3), **caractérisée en ce que**

a) les éléments de raccordement (2, 3) annulaires se chevauchent entièrement ou partiellement en sens radial,
b) et un ou plusieurs chemins de roulement (19, 20, 25, 26) pour des corps de roulements (21, 22) sphériques sont disposés dans des zones se chevauchant radialement (10, 16) des éléments de raccordement (2, 3) annulaires de façon telle que l'angle-support qui inclut la ligne de jonction entre les centres des points de contact d'un corps de roulement (21, 22) et ses deux chemins de roulement (19, 25 ; 20, 26) par rapport au plan d'anneau, soit égal ou supérieur à 75°, par exemple égal ou supérieur à 80°, de préférence égal ou supérieur à 85°, en particulier égal ou supérieur à 88° ou approximativement exact à 90°,
c) et où les corps de roulements (24, 24") d'au moins une rangée ont un angle-support de 15° ou moins, par exemple 10° ou moins, de préférence 5° ou moins, en particulier 2° ou moins.

2. Disposition de paliers à roulements selon la revendication 1, **caractérisée en ce que** les sections des chemins de roulement (19, 20, 25, 26) entourent la bille (21, 22) en question sur un angle inscrit de plus de 90°.

3. Disposition de paliers à roulements selon la revendication 1 ou 2, **caractérisée en ce qu'**un élément de raccordement (2, 3) annulaire présente au moins une zone (10, 16) périphérique, tournée vers l'autre, au moins un flanc (19, 20 ; 25, 26) dudit élément étant enveloppé au moins partiellement par l'autre élément de raccordement (2, 3), et/ou dont les deux flancs (19, 20 ; 25, 26) sont enveloppés au moins partiellement par l'autre élément de raccordement (2, 3).

4. Disposition de paliers à roulements selon l'une des revendications précédentes, **caractérisée en ce qu'** une zone périphérique, enveloppée côté flanc par l'autre élément de raccordement (2, 3) d'un élément de raccordement (2, 3) est réalisée sous la forme d'un prolongement (16) saillant, périphérique, en sens radial sur l'autre élément de raccordement (2, 3), où de préférence le/les flanc(s) (25, 26) d'au moins un prolongement (16) périphérique est/ sont réalisé(s) sous la forme de chemin(s) de roulement pour des corps de roulements (21, 22), et/ou dans la partie frontale (17) d'au moins un prolongement (16) est prévu au moins un chemin de roulement pour au moins une autre rangée de corps de roulements (24 ; 24").

5. Disposition de paliers à roulements selon l'une des revendications précédentes, **caractérisée en ce qu'**un élément de raccordement (2, 3) annulaire présente une section approximativement en forme de C avec au moins deux zones (4) périphériques, tournées vers l'autre élément de raccordement (2, 3), dans l'espace (10) desquelles s'étend une zone de l'autre élément de raccordement (2, 3), où de préférence sur deux surfaces intérieures (19, 20), tournées l'une vers l'autre, de l'élément de raccordement (2, 3) avec une section en forme de C est disposé respectivement un chemin de roulement pour une rangée de corps de roulements (21, 22), et/ou dans la zone d'au moins une cavité (10) entre deux zones (4) en relief de l'élément de raccordement (2, 3) avec une section en forme de C est prévu au moins un chemin de roulement (23, 23") pour au moins une autre rangée de corps de roulements (24, 24").

6. Disposition de paliers à roulements selon l'une des revendications précédentes, **caractérisée par** au moins deux rangées de corps de roulements (21, 22) qui ont respectivement un angle-support de 75° ou plus, par exemple de 80° ou plus, de préférence de 85° ou plus, en particulier de 88° ou plus.

7. Disposition de paliers à roulements selon l'une des revendications précédentes, **caractérisée en ce que** les corps de roulements (24, 24") avec un petit angle-support sont réalisés sous forme de rouleaux, de tonneaux ou de billes.

8. Disposition de paliers à roulements selon l'une des revendications précédentes, **caractérisée en ce qu'**au moins une rangée de corps de roulements (24, 24'') avec un petit angle-support est disposée en sens axial entre deux rangées de corps de roulements (21, 22) avec un grand angle-support.

9. Disposition de paliers à roulements selon l'une des revendications précédentes, **caractérisée en ce que** sur une partie de base du palier à roulement (1) la partie frontale de l'élément de raccordement (2, 3) qui y est en relief chevauche entièrement en sens radial la partie frontale de l'autre élément de raccordement (2, 3).

**10.** Disposition de paliers à roulements selon l'une des revendications précédentes, **caractérisée en ce qu'**un élément de raccordement (2") annulaire enveloppe entièrement l'autre élément de raccordement (3") sur une partie de base du palier à roulement (1).

**11.** Disposition de paliers à roulements selon l'une des revendications précédentes, **caractérisée en ce qu'**un élément de raccordement (2") annulaire enveloppe l'autre élément de raccordement (3") aussi bien radialement à l'intérieur que radialement à l'extérieur.

**12.** Disposition de paliers à roulements selon la revendication 11, **caractérisée en ce que** l'élément de raccordement (3") enveloppé des deux côtés présente sur sa surface latérale située radialement à l'intérieur ainsi que radialement à l'extérieur respectivement une zone (16a" ; 16b") périphérique, tournée vers l'autre élément de raccordement, dont les deux flancs sont enveloppés au moins partiellement par l'autre élément de raccordement (2").

**13.** Disposition de paliers à roulements selon l'une des revendications 11 ou 12, **caractérisée en ce que** les zones périphériques, enveloppées côté flanc par l'élément de raccordement (2") enveloppant des deux côtés, de l'élément de raccordement (3") enveloppé des deux côtés sont réalisées sous forme de prolongements (16a", 16b") saillants périphériques, radialement vers l'intérieur d'une part et radialement vers l'extérieur d'autre part sur l'élément de raccordement (2") enveloppant des deux côtés.

**14.** Disposition de paliers à roulements selon l'une des revendications 11 à 13, **caractérisée en ce que** l'élément de raccordement (3") enveloppé des deux côtés présente une section en forme de T ou en forme de t ou en forme de +, les deux extrémités de la traverse étant enveloppées par l'élément de raccordement (2") enveloppant des deux côtés.

**15.** Disposition de paliers à roulements selon l'une des revendications 11 à 14, **caractérisée en ce que** l'élément de raccordement (2", 3") enveloppant des deux côtés et/ou enveloppé des deux côtés présente respectivement une section qui est symétrique par rapport à un axe symétrique (38) parallèle à l'axe de rotation du palier (1").

**16.** Disposition de paliers à roulements selon l'une des revendications 11 à 15, **caractérisée en ce que** dans l'espace (11") entre l'élément de raccordement (2", 3") enveloppant des deux côtés et l'élément de raccordement enveloppé des deux côtés sont prévues au moins respectivement deux paires de rangées de corps de roulements (21a", 22a" ; 21b", 22b"), avec respectivement un grand angle-support, opposées les unes aux autres par rapport à un plan de base moyen du palier (1").

**17.** Disposition de paliers à roulements selon l'une des revendications 11 à 16, **caractérisée par** au moins une autre rangée de corps de roulements (43) avec un grand angle-support qui s'étend de manière opposée à la surface de raccordement (13") de l'élément de raccordement (3") enveloppé des deux côtés.

**18.** Disposition de paliers à roulements selon l'une des revendications 11 à 17, **caractérisée par** au moins une rangée de corps de roulements (24'') avec un petit angle-support qui s'étend sur la longueur de la partie frontale radialement intérieure ou sur la longueur de la partie frontale radialement extérieure de l'élément de raccordement (3") enveloppé des deux côtés.

**19.** Disposition de paliers à roulements selon l'une des revendications précédentes, **caractérisée en ce que** la cavité, en particulier l'espace (11) entre les deux éléments de raccordement (2, 3) est rendu étanche sur ses deux embouchures annulaires, de préférence respectivement par un joint d'étanchéité (38a", 39b").

**20.** Disposition de paliers à roulements selon la revendication 19, **caractérisée en ce que** les deux joints d'étanchéité (33a", 33b") sont appliqués respectivement sur un côté latéral de l'élément de raccordement (3") enveloppé des deux côtés ainsi que respectivement sur la zone adjacente, côté frontal, de l'autre élément de raccordement (2").

**21.** Disposition de paliers à roulements selon la revendication 19 ou 20, **caractérisée en ce que** l'un ou les deux joints d'étanchéité (33a", 33b") est ou sont ancrés respectivement sur un côté latéral de l'élément de raccordement (3") enveloppé des deux côtés, en particulier par insertion dans une rainure qui y est ménagée.

**22.** Disposition de paliers à roulements selon l'une des revendications précédentes, **caractérisée en ce que** la cavité (11 ; 11' ; 11'') protégée par un joint d'étanchéité entre les deux éléments de raccordement (2, 3) est rempli entièrement ou au moins principalement d'un lubrifiant, en particulier de graisse.

FIG. 1

FIG. 2

FIG. 3